(19) Europäisches Patentamt
European Patent Office
Office européen des brevets

(11) **EP 2 807 528 B1**

(12) **EUROPEAN PATENT SPECIFICATION**

(45) Date of publication and mention
of the grant of the patent:
**24.08.2016 Bulletin 2016/34**

(51) Int Cl.:
***G05F 1/67*** *(2006.01)*

(21) Application number: **13710024.4**

(22) Date of filing: **21.01.2013**

(86) International application number:
**PCT/IB2013/050529**

(87) International publication number:
**WO 2013/111044 (01.08.2013 Gazette 2013/31)**

(54) **METHOD FOR THE RESEARCH OF MAXIMUM AVAILABLE POWER IN PHOTOVOLTAIC GENERATORS**

VERFAHREN ZUR ERFORSCHUNG DER MAXIMALEN VERFÜGBAREN LEISTUNG BEI FOTOVOLTAIKGENERATOREN

MÉTHODE DE RECHERCHE DE PUISSANCE MAXIMUM DISPONIBLE DANS DES GÉNÉRATEURS PHOTOVOLTAÏQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.01.2012 IT MO20120018**

(43) Date of publication of application:
**03.12.2014 Bulletin 2014/49**

(73) Proprietor: **Bticino S.p.A.**
**21100 Varese (IT)**

(72) Inventors:
• **BUONOCUNTO, Nicola**
**I-42122 Reggio Emilia (IT)**
• **PAPAGNO, Alessandro**
**I-42124 Reggio Emilia (IT)**
• **REVELANT, Alessandro**
**I-33013 Gemona del Friuli (UD) (IT)**
• **STOCCO, Piero**
**I-33035 Martignacco (UD) (IT)**

(74) Representative: **Brunacci, Marco**
**BRUNACCI & PARTNERS S.r.l.**
**Via Scaglia Est, 19-31**
**41126 Modena (IT)**

(56) References cited:
**EP-A1- 2 395 550      EP-A2- 0 628 901**
**US-A- 5 869 956**

• **ESRAM T ET AL: "Comparison of Photovoltaic Array Maximum Power Point Tracking Techniques", IEEE TRANSACTIONS ON ENERGY CONVERSION, IEEE SERVICE CENTER, PISCATAWAY, NJ, US, vol. 22, no. 2, 1 June 2007 (2007-06-01), pages 439-449, XP011184738, ISSN: 0885-8969, DOI: 10.1109/TEC.2006.874230**

**Description**

Technical Field

The present invention relates to a method for the research of maximum available power in photovoltaic generators.

Background Art

The use is known of so-called photovoltaic inverters designed to convert the electricity produced by a photovoltaic generator, in the form of direct current, into alternate current to be supplied through the conventional power grid.

In particular, by photovoltaic generator is generally meant a system composed of a plurality of photovoltaic panels, these too in turn made up of several photovoltaic cells suitably connected the one to the other.

The photovoltaic inverters of known type have specific software and hardware control systems able to research the maximum power which can be supplied by the photovoltaic generators.

The photovoltaic generators, in fact, have such a voltage-current characteristic that an optimum work point exists, called Maximum Power Point, in correspondence to which the maximum available power can be extracted.

It is also known that such Maximum Power Point varies continuously during the course of a single day and during the course of the year, according to the level of solar radiation hitting each of the panels of the photovoltaic generators, to the temperature of the cells, to the ageing conditions of the single cells and also because of a non-uniform insolation due, e.g., to the presence of partial shadows on the panels during determinate hours of the day.

Consequently, the software and hardware control systems on the photovoltaic inverters generally devise the use of an MPPT (Maximum Power Point Tracking) function, implementable by means of different algorithms and methods depending on the parameters of accuracy and the settling time which has to be achieved.

In particular, a normal MPPT algorithm can remain "trapped" in correspondence to a relative maximum power, i.e., corresponding to a power value which is maximum only in relation to a specific section of the current-voltage characteristic, but which is not however a maximum absolute power value.

In such case, therefore, the inverter wastes a lot of available energy which is not therefore introduced into the power grid.

To overcome such drawback, the use is known of a so-called "sweep" method, which contemplates scanning the entire current-voltage characteristic of the photovoltaic generators, in order to identify the point of maximum absolute power.

By means of such method, the point of maximum absolute power of a photovoltaic generator can therefore be detected with the utmost accuracy, in a determinate time instant, excluding all the relative maximum points that might be present in correspondence to a number of current-voltage characteristic sections.

Such known method is not however without its drawbacks.

In fact, the scanning must necessarily be done along the entire curve of the current-voltage characteristic and therefore requires a considerably long time to be completed.

This involves an inevitable waste of energy during the research of maximum absolute power, inasmuch as during the scanning of the current-voltage characteristic of the photovoltaic panel, the inverter does not supply maximum available power.

Furthermore, the scanning of the characteristic can cause fluctuations in the power supplied by the inverter and this because of so-called "flicker" phenomena, i.e., undesired variations in voltage and disturbances on the power grid.

Document US 5 869 956 A discloses a method for the research of the point of maximum power (MPPT) in a photovoltaic generator in the presence of partial shading. This method sweeps periodically the I-V curve of the generator to find the presence of a global maximum different from the current local maximum. Document EP 0 628 901 A2 discloses an MPPT method, wherein the global maximum is obtained by interpolating the data of a set of consecutive measurements.

Document EP 2 395 550 A1 discloses a method for evaluating the present of shading in a photovoltaic generator. It gathers statistical data regarding the voltage, current and power produced at the generator for a lapse of time and build a model using these data. Then this model is used for establishing is the generator is under shading conditions.

Document XP011184738 discloses a method to obtain the MPP by using fuzzy logic control, neural networks or statistical data obtained for a long time (one year).

Description of the Invention

The main object of the present invention is to provide a method for the research of maximum available power in photovoltaic generators, able to dynamically identify the maximum absolute power in the best way and with short solution times.

Another object of the present invention is to provide a method for the research of the maximum available power in photovoltaic generators, able to dynamically identify the maximum absolute power while, at the same time, avoiding so-called "flicker" phenomena, i.e., undesired voltage variations and disturbances on the power grid.

Another object of the present invention is to provide a method for the research of maximum available power in photovoltaic generators which allows to overcome the mentioned drawbacks of the state of the art in the ambit of a simple, rational, easy and effective to use as well as low cost solution.

The above objects are achieved by the present method for the research of maximum available power in photovoltaic generators, characterized in that it comprises:

- a step of splitting up the total possible output voltage values of at least a photovoltaic generator into a predetermined number of voltage ranges;
- a step of assigning each of said voltage ranges a respective priority value;
- a step of selecting a possible point of maximum absolute power of said photovoltaic generator;
  and in that it comprises repeating cyclically:

- a step of selecting at least one of said voltage ranges according to said priority values;
- a step of selecting at least one point of comparison within said selected voltage range;
- a step of comparing the power value read in correspondence to said point of comparison with the power value read in correspondence to said possible point of maximum absolute power;
- if said power value in the point of comparison is higher than said power value in the possible point of maximum absolute power, a step of setting said point of comparison as new possible point of maximum absolute power, a step of increasing the priority value of said selected voltage range and/or a step of decreasing the priority value of at least one of the non-selected voltage ranges.

Brief Description of the Drawings

Other characteristics and advantages of the present invention will become more evident from the description of a preferred, but not sole, embodiment of a method for the research of maximum available power in photovoltaic generators, illustrated purely as an example but not limited to the annexed drawings in which:

Figure 1 is a block diagram which shows the method according to the invention;
Figure 2 is a graph which shows an example of current-voltage characteristic of a photovoltaic generator, split up into a predetermined number of voltage ranges;
Figure 3 is a graph which shows an example of possible increasing function usable in the method according to the invention;
Figure 4 is a graph which shows an example of possible decreasing function usable in the method according to the invention;
Figure 5 is a graph which shows, by way of example, a possible total output power and the possible work powers and voltages of a photovoltaic generator in case the method according to the invention is not used;
Figure 6 is a graph which shows, by way of example, a possible total output power and the possible work powers and voltages of a photovoltaic generator in case the method according to the invention is used.

Embodiments of the Invention

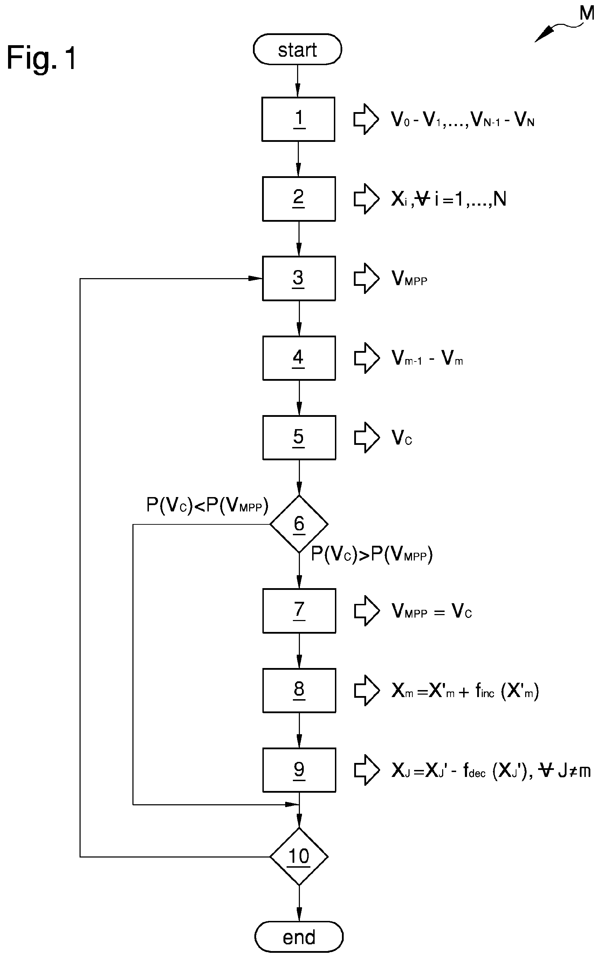

With particular reference to the figure 1, a method has been globally indicated by M for the research of maximum available power in photovoltaic generators, implementable in particular by means of the software or hardware control systems of photovoltaic inverters designed to convert the electricity produced by one or more photovoltaic generators, in the form of direct current, into alternate current to be supplied on the conventional power grid.

In particular, with the wording "photovoltaic generator" is meant a system made up of a plurality of photovoltaic panels, these too in turn made up of several photovoltaic cells suitably connected the one to the other.

Usefully, the method M is usable to identify, in a dynamic way, the maximum available power suppliable by one or more photovoltaic generators, while at the same time minimizing the energy wasted, the time taken and the generation of disturbances on the power grid during such identification procedure.

The method M first of all comprises splitting up the totality of the values of the output voltage V of a photovoltaic generator into a predetermined number N of voltage ranges (step 1).

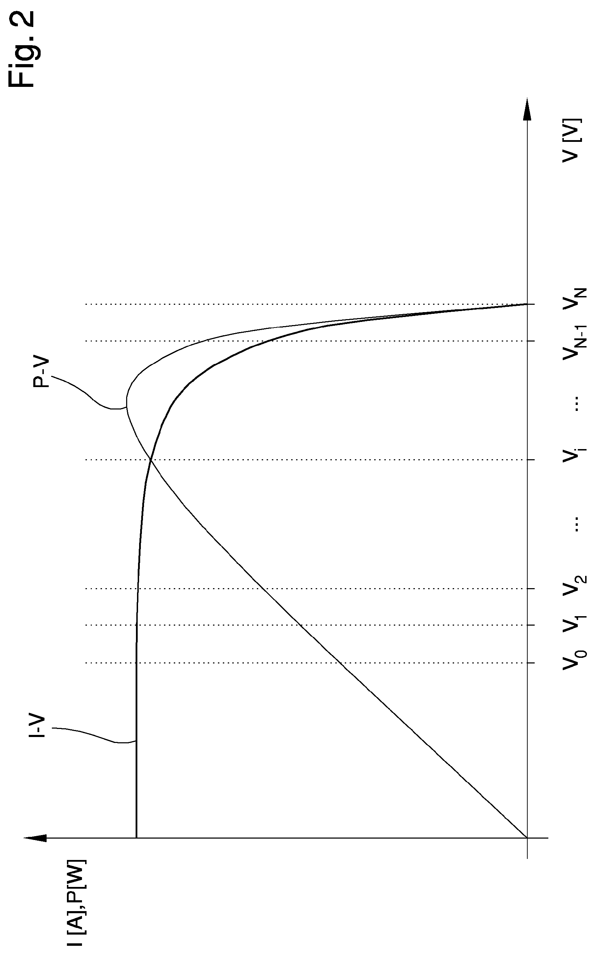

Figure 2 shows an example of the current-voltage characteristic, indicated by the letters I-V, and of the power-voltage characteristic indicated by the letters P-V, of a photovoltaic generator detected in a determinate instant.

As is known, such current-voltage characteristic (and therefore also the point of maximum absolute power) varies continuously during the course of a single day and during the course of the year, according to the level of solar radiation hitting each of the panels of the photovoltaic generators and due to any non-uniform insolation caused, e.g., by the presence of partial shadows on the panels during determinate hours of the day.

As can be seen in figure 2, the totality of the values of the output voltage V has been split up into N predefined voltage ranges, which go from the interval V0-V1 to the interval $V_{N-1}$-$V_N$.

Purely by way of example, in the case of a string of 800V MPP photovoltaic panels, one possibility is to split up the totality of voltage values of panel V into eight voltage levels from 360V to 780V, in order to obtain voltage ranges with an amplitude equal to about 60V each.

A different split-up of the values of the output voltage V cannot however be ruled out, or, more in general, a dynamic split-up of the entire output voltage range of the photovoltaic panel.

Subsequently, the method M devises the attribution of a priority value xi, with i from 1 to N, for each of the defined voltage ranges from $V_0$-$V_1$ to $V_{N-1}$-$V_N$, (step 2).

Usefully, the method M comprises the selection of a possible point of maximum absolute power VMPP suppliable from the photovoltaic generator (step 3). Preferably, the selection of such possible point of maximum absolute power VMPP is done by means of an MPPT algorithm of conventional type.

This way, the possible point of maximum absolute power $V_{MPP}$, if it does not actually correspond to the point of maximum absolute power of the entire current-voltage characteristic of the photovoltaic generator, at least corresponds to a relative maximum power point, i.e., to a point wherein the power is only maximum in relation to one specific section of the current-voltage characteristic.

The implementation of step 3, and therefore the selection of the possible point of maximum absolute power $V_{MPP}$ by means of different methods cannot however be ruled out.

The method M therefore contemplates the selection of one of the voltage ranges defined according to the respective priority values $x_i$ (step 4).

In particular, it is pointed out that by the expression "priority value" is meant the probability of each voltage range being selected during the step 4.

In a preferred embodiment of the method M, the priority values xi are initially all set at a predefined default value, so as to have a uniform distribution of probability for all the defined voltage ranges from $V_0$-$V_1$ to $V_{N-1}$-$V_N$. The first voltage range is selected by means of a series of extractions obtained from a pseudo-random sequence.

At step 5, the method M comprises the selection of a point of comparison $V_C$ (output voltage V belonging to the range selected in step 4), different from the possible point of maximum absolute power $V_{MPP}$ selected.

Preferably, the point of comparison $V_C$ chosen within the selected voltage range corresponds to the midpoint of the range itself.

This way, the time required for the research of maximum absolute can be reduced to the utmost (something that would not be pursuable by introducing a scan on the entire selected voltage range).

Advantageously, the method M comprises the comparison between the power value read in correspondence to the possible point of maximum absolute power $V_{MPP}$ selected with the power value read in correspondence to the point of comparison $V_C$ (step 6).

In particular, the method M checks whether $P(V_C) > P(V_{MPP})$ where:

- $P(V_C)$ is the active power in Watts calculated in the point of comparison VC belonging to the range $x_m$;
- $P(V_{MPP})$ is the active power in Watts calculated in the possible point of maximum absolute power $V_{MPP}$.

In the event of the power value at the selected point of comparison $V_C$ being higher than the power value in the possible point of maximum absolute power $V_{MPP}$, then:

- the point of comparison $V_C$ is set as possible point of maximum absolute power $V_{MPP}$ (step 7);
- the priority value $x_m$ of the selected m-th voltage range is increased (step 8);
- the priority value $x_j$, with j=1,...,N and j≠m, of at least one of the non-selected voltage ranges, is decreased (step 9).

Preferably, in this case the method M comprises both the increase of the priority value $x_m$ of the selected voltage range and, at the same time, the decrease of the priority values $x_j$ of each of the non-selected voltage ranges.

In particular, the increase of the priority value $x_m$ of the selected voltage range (step 8) comprises:

- the calculation of an increasing value;
- the addition of the increasing value thus calculated to the previous priority value $x'_m$ of the selected voltage range.

Usefully, the increase in the priority value $x_m$ is made according to the previous priority value $x'_m$ of the selected voltage range.

In particular, the increase in the priority value $x_m$ is made by means of the formula $x_m = x'_m + finc(x'_m)$, where:

- m is the position of the selected voltage range;
- $x_m$ is the new priority value of the selected voltage range;
- $x'_m$ is the previous priority value of the selected voltage range;
- $finc(x'_m)$ is an arbitrary function which determines the increasing value according to the priority value $x'_m$ of the selected voltage range; this function must be such as to make the method for the research of maximum absolute converge.

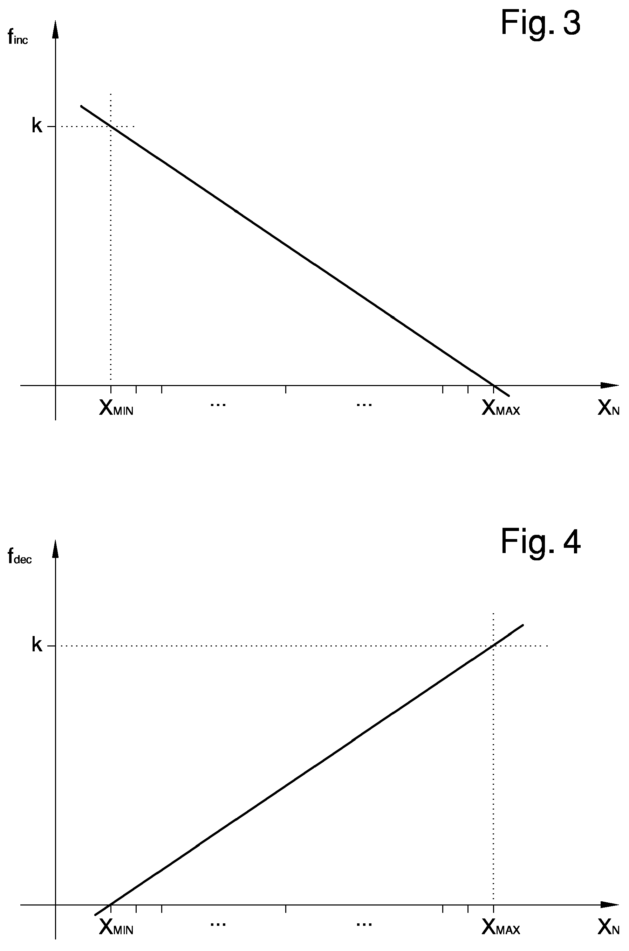

In a preferred embodiment shown in figure 3, the increasing function $finc(x'_m)$ is a linear function of the previous priority value $x'_m$.

In particular, in the embodiment shown in figure 3, the parameter k is equal to 15 and each of the priority values $x_i$, with i from 1 to N, varies between a minimum value of 15 up to a maximum value of 240.

The step 9 of decreasing the priority value $x_j$, with j=1,...,N and j≠m, of each of the non-selected voltage ranges comprises the following steps:

- calculating a decreasing value;
- subtracting the decreasing value from the previous priority value $x'_j$ of each of the non-selected voltage ranges.

Usefully, the decrease of the priority values $x_j$ of each of the non-selected voltage ranges is made according to the previous priority value $x'_j$ of each of the non-selected voltage ranges.

In particular, the decrease of the priority values $x_j$ is made by means of the following formula:

$$x_j = x'_j - fdec(x'_j), \text{ for each j between 1 and N and different from m, where:}$$

for each j between 1 and N and different from m, where:

- j indicates each of the positions of the non-selected voltage ranges (therefore not including the position m);
- $x_j$ indicates the new priority value of each of the non-selected voltage ranges;
- $X'_j$ indicates the previous priority value of each of the non-selected voltage ranges;
- $fdec(x'_j)$ is an arbitrary function which determines the decreasing value according to the priority value $x'_j$ for each of the non-selected voltage ranges; this function must be such as to make the method for the research of maximum absolute converge.

In a preferred embodiment shown in figure 4, the decreasing function $fdec(x'_j)$ is a linear function of the previous priority value $x'_j$ of each of the non-selected voltage ranges.

In particular, in the embodiment shown in figure 4, the parameter k is equal to 15 and each of the priority values $x_i$, with i from 1 to N, varies between a minimum value of 15 up to a maximum value of 240.

The increasing function $finc(x'_m)$ and the decreasing function $fdec(x'_j)$ are in fact optimized arbitrarily and take into account the compromise between, on the one hand, the need for an efficient convergence towards a maximum absolute value and, on the other, the need to research and identify new maximum absolutes.

In the event, instead, of the power value in the selected point of comparison $V_C$ being lower than the power value in the possible point of maximum absolute power $V_{MPP}$, then preferably the method M does not devise changes to the priority value $x_m$ of the selected m-th voltage range or the decrease of the priority values $x_j$ of each of the non-selected voltage ranges.

This way the learning capacity is maintained of the specific configuration of maximum absolute power values, the presence of which can be restricted to a few hours of operation during the course of the entire irradiation day. Nevertheless, generally speaking the possibility is not ruled out of changing the priority value $x_m$ of the selected m-th voltage range wherein the maximum absolute has not been found, as long as the law whereby the weights are assigned ensures the convergence of the method on the maximum absolutes of the string and the self-learning of the method in case of new maximum absolutes arising at voltages different from those already acquired. Advantageously, in the event of the method M for the research of maximum power not being interrupted by an operator of the inverter (step 10) or for other reasons, then the method M comprises the cyclic and sequential repetition of the following steps:

- step 3 for the selection of the possible point of maximum absolute power $V_{MPP}$;
- step 4 for the selection of one of the voltage ranges from the position 1 to the position N according to the relative

priority values $x_i$;

- step 5 for the selection of a point of comparison $V_C$ inside the selected m-th voltage range;
- step 6 of comparison between the power value read in correspondence to the point of comparison $V_C$ with the power value read in correspondence to the possible point of maximum absolute power $V_{MPP}$ selected and, if necessary;
- the step 7 for setting the point of comparison $V_C$ as possible point of maximum absolute power $V_{MPP}$ and the steps 8 and 9 for the increase of the priority value $x_m$ of the selected voltage range and the decrease of the priority value $x_j$ of each of the non-selected voltage ranges, respectively.

In particular, it is pointed out that at step 3, the intervention of an algorithm MPPT of conventional type allows moving the possible point of maximum absolute power $V_{MPP}$ as set at the previous step 7 towards a possible actual maximum point inside the selected m-th voltage range (or if necessary inside one of the adjacent voltage ranges).

It must also be pointed out that, the intervention of an algorithm MPPT at step 3 also permits modifying the possible point of maximum absolute power $V_{MPP}$ as set at the previous step 7 according to changes in the insolation conditions of the panels due, e.g., to the presence of partial shadows during determinate hours of the day.

The selection of the subsequent voltage range made at step 4 is implemented by means of a suitable software algorithm.

Preferably, such software algorithm makes a series of L extractions from a sequence of pseudo-random numbers from 1 to N and multiplies the priority value $x_i$ of each range by the number of times that such range has been extracted.

The chosen range is that with the greatest accumulation.

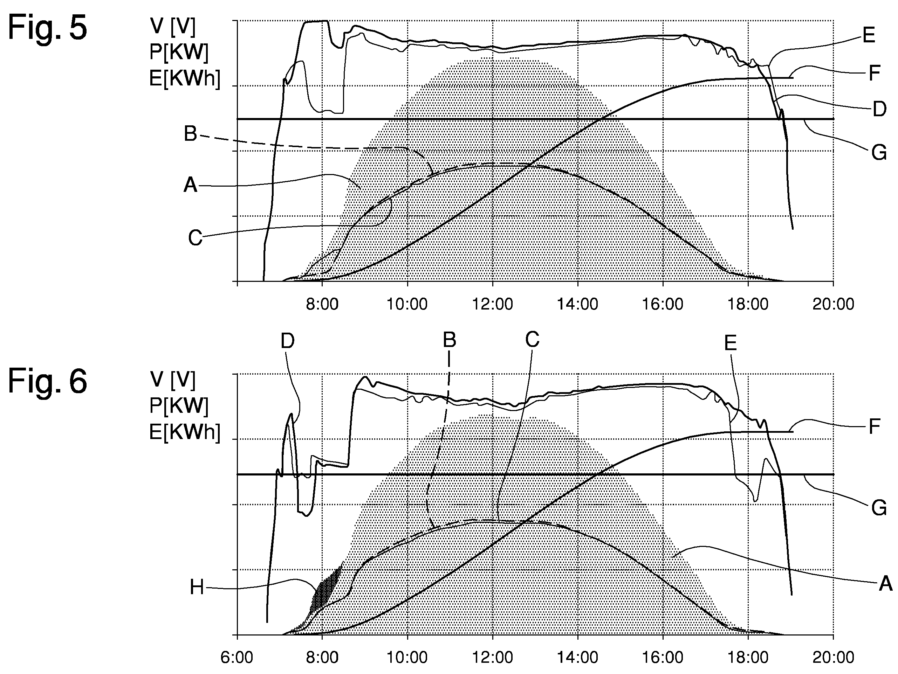

By way of example, the figures 5 and 6 show the graphs illustrating a possible total output power and the possible work powers and voltages of the individual photovoltaic generators, in the case of method M according to the invention not being used and in the case instead of method M according to the invention being used, respectively.

In particular, the graphs of the figures 5 and 6 have been obtained using two of the three available inputs of a photovoltaic inverter, to which are connected two photovoltaic generators respectively, each made according to the following configuration:

- 22 panels connected in series for each string;
- 3 strings connected together in parallel;
- a rated string Voc open circuit voltage of 972V;
- a Maximum Power Point Vmpp rated string voltage of 770V;
- a rated string power under STC conditions (Standard Test Conditions: operating temperature 25°C, incident solar irradiation 1000W/m2, spectral distribution 1.5) of 11.550W.

Furthermore, the panels used have the following characteristics:

- a rated Voc voltage of 44.2V;
- a rated Vmpp voltage of 35V;
- a rated STC power of 175W.

In particular, the figures 5 and 6 show:

- the total power of the inverter, indicated by the reference A;
- the input powers of the individual generators, indicated by the references B and C;
- the work voltages of the individual generators, indicated by the references D and E respectively, by means of which, the work point variations can be seen;
- the energy produced by the plant during one day, indicated by the reference F;
- the average daily energy expected on the basis of the plant characteristics, indicated by the reference G.

More precisely, in the figures 5 and 6 are traced the time patterns of the illustrated quantities recorded in the same period of the year, during the course of two days with similar irradiation, before (figure 5) and after (figure 6) the activation of the method M according to the invention.

From the graphs, the typical pattern of power A can be seen produced by a photovoltaic plant during one clear day, in which however an asymmetric pattern can be seen in the first hour of the morning compared to the evening, a phenomenon caused precisely by a non-uniform irradiation on the generator strings.

Observing the power A introduced into the grid in the time bracket between 7.30 am and 8.30 am approx. it will be seen that this increases considerably when the method M is active compared to operation with only the algorithm MPPT of conventional type (area indicated by the reference H in figure 6), because the latter is blocked in a local maximum at lower power with a voltage close to the rated $V_{MPP}$ voltage.

In particular, it can be seen how the method M according to the invention, in the first parts of the day, identifies, for the voltage D of the first generator, a new work point with voltage lower than the $V_{MPP}$ rated voltage of the string, thus allowing the photovoltaic generator to supply a greater power A.

In particular, the fact is underlined that with reference to the analysis made and illustrated in the figures 5 and 6, it has been possible to record an average increase in the energy produced by the inverter of 55% with peaks of even 70%. It has in fact been ascertained how the described invention achieves the proposed objects.

In particular, the fact is underlined that the method according to the invention permits dynamically identifying the maximum absolute power in an optimum way and with low settling times.

It is also pointed out that the results are all the more important when the partial shadows remain on the strings during the day hours and cover one or more photovoltaic panels, a condition common for example during the winter months, due to the very extended shadows of objects close to the panels.

Furthermore, the method according to the invention permits dynamically identifying the maximum absolute power while at the same time avoiding so-called "flicker" phenomena, i.e., undesired variations in voltage and undesired disturbances on the grid.

## Claims

1. Method (M) for the research of maximum available power in photovoltaic generators, **characterized in that** it comprises:

   - a step (1) of splitting up the total possible output voltage values (V) of at least a photovoltaic generator into a predetermined number (N) of voltage ranges ($V_0$-$V_1$,...,$V_{N-1}$-$V_N$);
   - a step (2) of assigning each of said voltage ranges ($V_0$-$V_1$,...,$V_{N-1}$-$V_N$) respective priority values ($x_i$);
   - a step (3) of selecting a possible point of maximum absolute power ($V_{MPP}$) of said photovoltaic generator;
   and **in that** it comprises repeating cyclically:

      - a step (4) of selecting at least one of said voltage ranges ($V_0$-$V_1$,...,$V_{N-1}$-$V_N$) according to said priority values ($x_i$);
      - a step (5) of selecting at least one point of comparison ($V_C$) within said selected voltage range;
      - a step (6) of comparing the power value generated by said photovoltaic generator at said point of comparison ($V_C$) with the power value generated by said photovoltaic generator at said possible point of maximum absolute power ($V_{MPP}$);
      - if said power value in the point of comparison ($V_C$) is higher than said power value in the possible point of maximum absolute power ($V_{MPP}$), a step (7) of setting said point of comparison ($V_C$) as new possible point of maximum absolute power ($V_{MPP}$), a step (8) of increasing the priority value ($x_m$) of said selected voltage range and/or a step (9) of decreasing the priority value ($x_j$) of at least one of the non-selected voltage ranges.

2. Method (M) according to claim 1, **characterized in that** said step (3) of selecting a possible point of maximum absolute power ($V_{MPP}$) of said photovoltaic generator is repeated cyclically before said step (6) of comparing.

3. Method (M) according to one or more of the preceding claims, **characterized in that** said step (8) of increasing the priority value ($x_m$) of the selected voltage range comprises the following steps:

   - calculating at least an increasing value;
   - adding said increasing value to the previous priority value ($x'_m$) of the selected voltage range.

4. Method (M) according to claim 3, **characterized in that** said step of calculating the increasing value is made according to the previous priority value ($x'_m$) of said selected voltage range.

5. Method (M) according to claim 4, **characterized in that** said step (8) of increasing the priority value ($x'_m$) of the selected voltage range is made using the following formula:

$$x_m = x'_m + f_{inc}(x'_m)$$

where

- m is the position of the selected voltage range;
- $x_m$ is the new priority value of said selected voltage range;
- $x'_m$ is the previous priority value of said selected voltage range;
- $f_{inc}(x'_m)$ is an arbitrary function which determines said increasing value according to said priority value ($x'_m$) of the selected voltage range and such as to make the method for the research of maximum absolute converge.

6. Method (M) according to one or more of the preceding claims, **characterized in that** said step (9) of decreasing the priority value ($x_j$) of at least one of said non-selected voltage ranges comprises the following steps:

- calculating at least a decreasing value;
- subtracting said decreasing value from the previous priority value ($x'_j$) of at least one of said non-selected voltage ranges.

7. Method (M) according to claim 6, **characterized in that** said step of calculating the decreasing value is made according to the previous priority value ($x'_j$) of said at least one of the non-selected voltage ranges.

8. Method (M) according to claim 7, **characterized in that** said step (9) of decreasing the priority value ($x_j$) by at least one of said non-selected voltage ranges is made using the following formula:

$$x_j = x'_j - f_{dec}(x'_j)$$

where

- j is the position of said at least one of the non-selected voltage ranges;
- $x_j$ is the new priority value of said at least one of the non-selected voltage ranges;
- $x'_j$ is the previous priority value of at least one of the non-selected voltage ranges;
- $f_{dec}(x'_j)$ is an arbitrary function which determines said decreasing value according to said priority value ($x'_j$) of said at least one of the non-selected voltage ranges and such as to make the method for the research of maximum absolute converge.

**Patentansprüche**

1. Verfahren (M) zur Untersuchung von maximal verfügbarer Leistung in photovoltaischen Generatoren, **dadurch gekennzeichnet, dass** es Folgendes umfasst:

- einen Schritt (1) des Aufteilens der gesamten möglichen Ausgangsspannungswerte (V) von mindestens einem photovoltaischen Generator in eine vorbestimmte Anzahl (N) von Spannungsbereichen ($V_0$-$V_1$,...,$V_{N-1}$-$V_N$);
- einen Schritt (2) des Zuordnens von jedem der Spannungsbereiche ($V_0$-$V_1$,...,$V_{N-1}$-$V_N$) zu jeweiligen Prioritätswerten ($x_i$);
- einen Schritt (3) des Auswählens einer möglichen Stelle einer maximalen absoluten Leistung ($V_{MPP}$) des photovoltaischen Generators;
und dass es das zyklische Wiederholen von Folgendem umfasst:

- einem Schritt (4) des Auswählens mindestens eines der Spannungsbereiche ($V_0$-$V_1$,...,$V_{N-1}$-$V_N$) gemäß der Prioritätswerte ($x_i$);
- einem Schritt (5) des Auswählens mindestens einer Vergleichsstelle ($V_C$) innerhalb des ausgewählten Spannungsbereichs;
- einem Schritt (6) des Vergleichens des Leistungswerts, der von dem photovoltaischen Generator an der Vergleichsstelle ($V_C$) erzeugt wurde, mit dem Leistungswert, der von dem photovoltaischen Generator an der möglichen Stelle der maximalen absoluten Leistung ($V_{MPP}$) erzeugt wurde;
- wenn der Leistungswert in der Vergleichsstelle ($V_C$) höher als der Leistungswert in der möglichen Stelle der maximalen absoluten Leistung ($V_{MPP}$) ist, einem Schritt (7) des Einstellens der Vergleichsstelle ($V_C$) als neue mögliche Stelle der maximalen absoluten Leistung ($V_{MPP}$), einem Schritt (8) des Erhöhens des

Prioritätswerts ($x_m$) des ausgewählten Spannungsbereichs und/oder einem Schritt (9) des Verringerns des Prioritätswerts ($x_j$) von mindestens einem der nicht ausgewählten Spannungsbereiche.

2. Verfahren (M) nach Anspruch 1, **dadurch gekennzeichnet, dass** der Schritt (3) des Auswählens einer möglichen Stelle der maximalen absoluten Leistung ($V_{MPP}$) des photovoltaischen Generators zyklisch vor dem Schritt (6) des Vergleichens wiederholt wird.

3. Verfahren (M) nach einem oder mehreren der vorherigen Ansprüche, **dadurch gekennzeichnet, dass** der Schritt (8) des Erhöhens des Prioritätswerts ($x_m$) des ausgewählten Spannungsbereichs folgende Schritte umfasst:

   - Berechnen mindestens eines ansteigenden Werts;
   - Hinzufügen des ansteigenden Werts zu dem vorherigen Prioritätswert ($x'_m$) des ausgewählten Spannungs-bereichs.

4. Verfahren (M) nach Anspruch 3, **dadurch gekennzeichnet, dass** der Schritt des Berechnens des ansteigenden Werts gemäß des vorherigen Prioritätswerts ($x'_m$) des ausgewählten Spannungsbereichs durchgeführt wird.

5. Verfahren (M) nach Anspruch 4, **dadurch gekennzeichnet, dass** der Schritt (8) des Erhöhens des Prioritätswerts ($x'_m$) des ausgewählten Spannungsbereichs unter Verwenden folgender Formel durchgeführt wird:

$$x_m = x'_m + f_{inc}(x'_m)$$

wobei

   - m die Position des ausgewählten Spannungsbereichs ist;
   - $x_m$ der neue Prioritätswert des ausgewählten Spannungsbereichs ist;
   - $x'_m$ der vorherige Prioritätswert des ausgewählten Spannungsbereichs ist;
   - $f_{inc}(x'_m)$ eine willkürliche Funktion ist, welche den ansteigenden Wert gemäß des Prioritätswerts ($x'_m$) des ausgewählten Spannungsbereichs derart bestimmt, dass das Verfahren zur Untersuchung eines maximalen absoluten Werts konvergiert.

6. Verfahren (M) nach einem oder mehreren der vorherigen Ansprüche, **dadurch gekennzeichnet, dass** der Schritt (9) des Verringerns des Prioritätswerts ($x_j$) mindestens eines der nicht ausgewählten Spannungsbereiche folgende Schritte umfasst:

   - Berechnen mindestens eines sich verringernden Werts;
   - Subtrahieren des sich verringernden Werts von dem vorherigen Prioritätswert ($x'_j$) von mindestens einem der nicht ausgewählten Spannungsbereiche.

7. Verfahren (M) nach Anspruch 6, **dadurch gekennzeichnet, dass** der Schritt des Berechnens des sich verringernden Werts gemäß des vorherigen Prioritätswerts ($x'_j$) des mindestens einen der nicht ausgewählten Spannungsbereiche durchgeführt wird.

8. Verfahren (M) nach Anspruch 7, **dadurch gekennzeichnet, dass** der Schritt (9) des Verringerns des Prioritätswerts ($x_j$) um mindestens einen der nicht ausgewählten Spannungsbereiche unter Verwenden folgender Formel durchgeführt wird:

$$x_j = x'_j - f_{dec}(x'_j)$$

wobei

   - j die Position des mindestens einen der nicht ausgewählten Spannungsbereiche ist;
   - $x_j$ der neue Prioritätswert des mindestens einen der nicht ausgewählten Spannungsbereiche ist;
   - $x'_j$ der vorherige Prioritätswert mindestens eines der nicht ausgewählten Spannungsbereiche ist;
   - $f_{dec}(x'_j)$ eine willkürliche Funktion ist, welche den sich verringernden Wert gemäß des Prioritätswerts ($x'_j$) von

dem mindestens einen der nicht ausgewählten Spannungsbereiche derart bestimmt, dass das Verfahren zur Untersuchung eines maximalen absoluten Werts konvergiert.

**Revendications**

1. Procédé (M) de recherche de puissance maximum disponible dans des générateurs photovoltaïques, **caractérisé en ce qu'**il comprend:

   - une étape (1) de séparation des valeurs de tension de sortie totales possibles (V) d'au moins un générateur photovoltaïque en un nombre prédéterminé (N) de plages de tension ($V_0$ - $V_1$, ..., $V_{N-1}$ - $V_N$);
   - une étape (2) d'attribution à chacune desdites plages de tension ($V_0$ - $V_1$, ..., $V_{N-1}$ - $V_N$) de valeurs de priorité respectives ($x_i$);
   - une étape (3) de sélection d'un point possible de puissance absolue maximum ($V_{MPP}$) dudit générateur photovoltaïque;
   et **en ce qu'**il comprend le fait de répéter de manière cyclique:

      - une étape (4) de sélection d'au moins une desdites plages de tension ($V_0$ - $V_1$, ..., $V_{N-1}$ - $V_N$) en fonction desdites valeurs de priorité ($x_i$);
      - une étape (5) de sélection d'au moins un point de comparaison ($V_C$) à l'intérieur de ladite plage de tension sélectionnée;
      - une étape (6) de comparaison de la valeur de puissance générée par ledit générateur photovoltaïque audit point de comparaison ($V_C$) à la valeur de puissance générée par ledit générateur photovoltaïque audit point possible de puissance absolue maximum ($V_{MPP}$);
      - si ladite valeur de puissance au point de comparaison ($V_C$) est supérieure à ladite valeur de puissance au point possible de puissance absolue maximum ($V_{MPP}$), une étape (7) d'établissement dudit point de comparaison ($V_C$) comme nouveau point possible de puissance absolue maximum ($V_{MPP}$), une étape (8) d'augmentation de la valeur de priorité ($x_m$) de ladite plage de tension sélectionnée et/ou une étape (9) de diminution de la valeur de priorité ($x_j$) d'au moins une des plages de tension non sélectionnées.

2. Procédé (M) selon la revendication 1, **caractérisé en ce que** ladite étape (3) de sélection d'un point possible de puissance absolue maximum ($V_{MPP}$) dudit générateur photovoltaïque est répétée de manière cyclique avant ladite étape (6) de comparaison.

3. Procédé (M) selon une ou plusieurs des revendications précédentes, **caractérisé en ce que** ladite étape (8) d'augmentation de la valeur de priorité ($x_m$) de la plage de tension sélectionnée comprend les étapes suivantes consistant à:

   - calculer au moins une valeur croissante;
   - ajouter ladite valeur croissante à la valeur de priorité précédente ($x'_m$) de la plage de tension sélectionnée.

4. Procédé (M) selon la revendication 3, **caractérisé en ce que** ladite étape de calcul de la valeur croissante est effectuée en fonction de la valeur de priorité précédente ($x'_m$) de ladite plage de tension sélectionnée.

5. Procédé (M) selon la revendication 4, **caractérisé en ce que** ladite étape (8) d'augmentation de la valeur de priorité ($x'_m$) de la plage de tension sélectionnée est effectuée en utilisant la formule suivante:

$$x_m = x'_m + f_{inc}(x'_m)$$

dans laquelle:

   - m est la position de la plage de tension sélectionnée;
   - $x_m$ est la nouvelle valeur de priorité de ladite plage de tension sélectionnée;
   - $x'_m$ est la précédente valeur de priorité de ladite plage de tension sélectionnée;
   - $f_{inc}(x'_m)$ est une fonction arbitraire qui détermine ladite valeur croissante en fonction de ladite valeur de priorité ($x'_m$) de la plage de tension sélectionnée et qui est telle qu'elle permet au procédé de recherche de maximum absolu de converger.

**6.** Procédé (M) selon une ou plusieurs des revendications précédentes, **caractérisé en ce que** ladite étape (9) de diminution de la valeur de priorité ($x_j$) d'au moins une desdites plages de tension non sélectionnées comprend les étapes suivantes consistant à:

    - calculer au moins une valeur décroissante;
    - soustraire ladite valeur décroissante de la valeur de priorité précédente ($x'_j$) d'au moins une desdites plages de tension non sélectionnées.

**7.** Procédé (M) selon la revendication 6, **caractérisé en ce que** ladite étape de calcul de la valeur décroissante est effectuée en fonction de la valeur de priorité précédente ($x'_j$) de ladite au moins une des plages de tension non sélectionnées.

**8.** Procédé (M) selon la revendication 7, **caractérisé en ce que** ladite étape (9) de diminution de la valeur de priorité ($x_j$) d'au moins une desdites plages de tension non sélectionnées est effectuée en utilisant la formule suivante:

$$x_j = x'_j \; - \; f_{dec}(x'_j)$$

dans laquelle:

    - j est la position de ladite au moins une des plages de tension non sélectionnées;
    - $x_j$ est la nouvelle valeur de priorité de ladite au moins une des plages de tension non sélectionnées;
    - $x'_j$ est la précédente valeur de priorité d'au moins une des plages de tension non sélectionnées;
    - $f_{dec}(x'_j)$ est une fonction arbitraire qui détermine ladite valeur décroissante en fonction de ladite valeur de priorité ($x'_j$) de ladite au moins une des plages de tension non sélectionnées et qui est telle qu'elle permet au procédé de recherche de maximum absolu de converger.

Fig. 1

M

start

↓

| 1 | ⇨ $V_0 - V_1,...,V_{N-1} - V_N$ |

↓

| 2 | ⇨ $X_i, \forall i = 1,...,N$ |

↓

| 3 | ⇨ $V_{MPP}$ |

↓

| 4 | ⇨ $V_{m-1} - V_m$ |

↓

| 5 | ⇨ $V_C$ |

↓

$P(V_C) < P(V_{MPP})$ ← | 6 |

$P(V_C) > P(V_{MPP})$

↓

| 7 | ⇨ $V_{MPP} = V_C$ |

↓

| 8 | ⇨ $X_m = X'_m + f_{inc}(X'_m)$ |

↓

| 9 | ⇨ $X_J = X_J' - f_{dec}(X_J'), \forall J \neq m$ |

↓

| 10 |

↓

end

Fig. 2

EP 2 807 528 B1

Fig. 3

$f_{inc}$

$k$

$X_{MIN}$    ...    ...    $X_{MAX}$    $X_N$

Fig. 4

$f_{dec}$

$k$

$X_{MIN}$    ...    ...    $X_{MAX}$    $X_N$

Fig. 5

Fig. 6

**EP 2 807 528 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5869956 A
- EP 0628901 A2
- EP 2395550 A1